Europäisches Patentamt

European Patent Office

Office européen des brevets

(19)

(11) Publication number: **0 181 153**
**A2**

(12) # EUROPEAN PATENT APPLICATION

(21) Application number: **85307870.7**

(22) Date of filing: **30.10.85**

(51) Int. Cl.⁴: **C 05 F 7/02**
**C 05 F 9/04**

(30) Priority: **06.11.84 GB 8428034**

(43) Date of publication of application:
**14.05.86 Bulletin 86/20**

(84) Designated Contracting States:
**AT BE CH DE FR GB LI NL**

(71) Applicant: **BOWATER TECHNICAL SERVICES LIMITED**
**Bowater House Knightsbridge**
**London SW1X 7LR(GB)**

(72) Inventor: **Neal, Rosalind Elspeth**
**11, Waldeck Road**
**Luton Bedfordshire(GB)**

(72) Inventor: **Edwards, Clive Arthur**
**1, Ashley Gardens**
**Harpenden Hertfordshire(GB)**

(74) Representative: **Spencer, Graham Easdale et al,**
**A.A. Thornton & CO Northumberland House 303-306,**
**High Holborn**
**London WC1V 7LE(GB)**

(54) **Process for the utilisation of solid paper mill waste.**

(57) A process for the utilisation of solid paper mill waste comprises introducing earthworms and/or earthworm cocoons into a mass of the waste and allowing the worms to mature and breed in the waste until it is converted into a friable, soil-like material. The earthworms and the friable, soil-like material may be subsequently separated; the material is suitable for use as a horticultural compost.

EP 0 181 153 A2

Croydon Printing Company Ltd.

- 1 -

## Process for the utilisation of solid paper mill waste

This invention is concerned with a process for the utilisation of solid paper mill waste. This waste consists predominantly of residual liquor and cellulose fibres from the mechanical and chemical treatment of wood in the manufacture of pulp and paper. Other substances in the waste include those lost during the various manufacturing processes and may include clay, starches, caseins and other organic and inorganic compounds. The solid waste is generally obtained by the filtration or settlement of dilute suspensions obtained either from the individual manufacturing processes or the total mill effluent. The waste decomposes naturally at a very slow rate and previously has only been considered suitable for landfill. It is considered to be a possible source of pollution if it is dumped indiscriminately. The waste represents a renewable resource which is lost by present disposal methods.

It has now been found that this paper mill waste can be broken down rapidly by earthworms, producing a friable, soil-like material which has economic value as a plant-growth substrate or soil conditioner. This represents a valuable way of utilizing the waste, turning a material of no value into a useful, saleable product and removing the need for disposal by landfill.

According to the present invention, therefore, there is provided a process for the utilization of solid paper mill waste, which comprises introducing earthworms and/or earthworm cocoons into a mass of the waste and allowing the worms to mature and breed in the waste until it is converted into a friable, soil-like material.

It is believed that the earthworms derive most of their nourishment from microorganisms which are present in or grow on the waste. As the worms feed, the waste is ground up and decomposed in a manner which is quite rapid and unique: the burrowing activity of the worms brings oxygen into the waste and the digestive processes of the worm gut cause both physical and chemical breakdown of the organic matter. These actions accelerate and enhance the microbial decomposition of the waste. The resultant worm-worked residue is quite different from a compost produced without worms, having greatly superior physical chemical and biological properties.

During the process of comminution by the worms, the waste does not undergo composting. That is to say the temperature of the waste is not allowed to rise above 35°C during the process and the physical comminution is achieved entirely by the passage of the waste through the gut of the worm, although further chemical degradation may occur as a result of microbial activity.

Preferred species of earthworms for use in the process according to the invention are <u>Eisenia</u> <u>foetida</u> and <u>Eudrilus</u> <u>eugeniae</u>.

The paper waste as produced has a solids content of 28-35% by weight; although the worms will work the waste at this level of solids, the rate of processing can be increased by raising the water content to 76% by weight. However, deep beds of paper waste at this water content may compact and become anaerobic, a condition in which the worms cannot survive. The handling properties of the waste after processing are also improved by a reduction in the water content. A
reasonable compromise is about 35% solids by weight.

Other factors which must be controlled in
vermiculture systems include pH, ammonia concentration,
total salt concentration, and temperature. The pH of
the waste must lie in the pH range 5 to 9 and the
ammonia concentration should be lower than one milligram
per gram. In practice the waste conforms to both these
requirements without treatment. The total salt concentration must lie below a certain level, but the actual
concentration depends on the nature of the salts present.
The simplest test for the suitability of waste for
worm processing is to place a few worms in a small amount
of the waste and check their survival after several
days. If necessary, excess salts can be leached out
of the waste with water. The temperature of the worm
bed should be maintained at between 5° and 30°C for
E. foetida or 15° and 30°C for E. eugeniae; the optimum
temperature range for both species is 20° to 25°C. Worm
activity increases as the temperature is raised, but
temperatures above 30°C can be fatal. Worm beds therefore require insulation from extreme summer and winter
temperatures and may need heating during winter months.

E. foetida, the tiger or brandling worm, is a common
inhabitant of compost and manure heaps in Britain and is
reared commercially for fish bait. E. eugeniae is a
tropical species which also lives in material with a high
organic matter content. Other species of earthworm which
may be used in the process include Perionyx excavatus and
Dendrobaena veneta. These do not grow quickly or process
the paper waste as efficiently as E. foetida or E. eugeniae;
field worms of the Lumbricidae family are also less
suitable because of their very slow reproductive rate.
However, while the invention is described hereinafter
with particular reference to E. foetida, it will be understood that other species can be made to perform well with some adaptation of the conditions described for E. foetida. D. veneta, for example, requires the paper waste to be mixed with an additional nutrient material, such as animal manures, or an artificial source of nitrogen, such as urea.

The time required to process the waste in the bed is determined by the rate at which it is worked by the worms and the depth of waste present. The efficiency with which the worms work the waste depends on the temperature and moisture content of the waste and the population density of the worms. A high density inoculum of about 2 kg of worms per square metre gives a satisfactory rate of waste processing. The waste can be removed from the bed when it has the appearance of a granular material or it can be left in the bed and replenished with a layer of fresh waste. The final particle size of the worked waste depends on the size of the worms. Adult worms of the larger species such as E. eugeniae and D. veneta produce larger worm casts than E. foetida, although young worms will of course produce smaller particles in proportion to their size. Small particles can also be produced by leaving the worms in the bed after the waste has been worked, or by storing the waste with some live worms or cocoons present, when they will re-eat the worked waste and break it down still further.

The process of the invention can be performed in stackable boxes or crates or in free-standing beds on a solid floor or on a floor with drainage if the beds are to be watered regularly. The inoculum of worms can be added directly to the surface of the waste or the waste can be incorporated with some material in which the worms are already living. There is no advantage to adding worms of one particular age; a mixture of cocoons, immature worms and adults removed from another bed is ideal. Thus a new bed can be started simply by leaving behind a proportion of the previous bed.

The worms produced by reproduction of the resident population represent a second product which can be marketed. Earthworms are composed of 60-70% protein, 8-20% carbohydrate, 7-10% fat and 2-3% minerals and are rich in vitamins. They are potentially useful as a protein additive to poultry, pig and fish feeds. They can be separated from the waste mechanically and then processed into an animal feed; this process has been described in British Specification 2126574A.

The soil-like product obtained by the process of the invention has a much finer structure after working by worms than unworked waste; it is suitable as a medium for plant growth either on its own or when mixed with other plant growth media, such as peat, sand or chemical fertilizers in any appropriate proportions. It can replace all or part of a conventional compost if the appropriate nutrients are added. Before sale to horticultural retail outlets, the waste may be steam sterilised to kill any remaining worms. This can be achieved by raising the temperature of the waste to about 60°C for 30 minutes.

In order that the invention may be more fully understood, the following examples are given by way of illustration only.

Example 1

The growth of E. foetida and E. eugeniae in a limited amount of paper mill waste was monitored in the laboratory. The reproductive rate of E. foetida was also recorded. Four worms of each species weighing approximately 0.1 g each were grown in small plastic dishes with perforated lids containing 100 grams (wet weight) of paper mill waste. Three replicates were prepared for each species and stored in an incubator at 20°C.

The worms were removed at weekly intervals and weighed, earthworm cocoons (eggs) were counted, and an assessment was made of the proportion of waste which had been worked by the worms.

E. foetida increased in weight at the rate of 0.035 g per worm per week; E. eugeniae increased by 0.052 g per worm per week. 50% of the E. foetida were mature in six weeks, the first cocoons were found at eight weeks and the average cocoon production rate after this time was 0.54 cocoons per mature worm per week.

All these values are considerably less than those for worms grown in animal manures or a mixture of manure and paper mill waste. It is therefore convenient to breed worms quickly for inoculation using a mixture of paper mill waste and another organic waste with a higher nitrogen content.

With both species of worm, the waste was approximately worked after seven weeks.

A second growth trial, but on a larger scale in a heated wormery bed, was conducted using a bed of about 2 $m^2$ constructed of brick and sleeper walls with a steel mesh floor below which lay heating cables embedded in sand. The worms were placed in the bottom of the bed as an inoculum in worked cattle manure at a rate of approximately 3 kg of worms per square metre. The temperature was maintained at about 25°C and the bed was replenished with a thin layer of fresh waste when the previous layer had been worked.

After 3 months 250 kg of paper waste had been completely worked and the weight of earthworms had increased to about 6.5 kg per square metre.

Example 2    Plant growth in worm-worked waste

Seven species of plants were grown in worm-worked paper mill waste. Sixty seeds of each species were sown in each of three potting media, viz. processed waste alone, processed waste mixed with 25% peat, and Levington compost as a control. The germination rates were as follows (Table 1).

Table 1
Percentage germination

|  | 100% paper | 75% paper 25% peat | Levington compost |
|---|---|---|---|
| cabbage (Greyhound) | 90 | 87 | 90 |
| tomato (Moneymaker) | 97 | 90 | 97.5 |
| radish (Scarlet Globe) | 85 | 87.5 | 80 |
| lettuce (Lobjoits Green Cos) | 90 | 92.5 | 85 |
| antirrhinum (Tom Thumb Mixed) | 90 | 82.5 | 72.5 |
| salvia (Blaze of Fire) | 45 | 62.5 | 62.5 |
| dahlia (Unwins Dwarf Hybrid) | 70 | 72.5 | 72.5 |

A proportion of the seedlings from each experiment was transplanted into the same potting medium containing a slow-release fertiliser (Osmocote 15-12-15). Observations were made on the rate of growth, the age at flowering and the yield of edible parts of the plants. A selection of these results is given below (Table 2).

Table 2
Growth indices

|  | 100% paper | 75% paper 25% peat | Levington compost |
|---|---|---|---|
| Mean wet weight of root(g) |  |  |  |
| radish (32 days) | 0.50 | 4.45 | 1.75 |
| Dry weight |  |  |  |
| cabbage (28 days) | 0.20 | 0.19 | 0.27 |
| cabbage (91 days) | 13.54 | 18.64 | 18.93 |
| tomato (25 days) | 0.21 | 0.22 | 0.21 |

|  | 100% paper | 75% paper 25% peat | Levington compost |
|---|---|---|---|
| **Age at first ripe fruit (days from sowing)** | | | |
| tomato | 122 | 119 | 119 |
| **Height (cm)** | | | |
| dahlia (35 days) | 6.6 | 11.2 | 6.3 |
| antirrhinum ( 44 days) | 6.3 | 6.8 | 8.1 |

These results show that worm-worked paper mill waste is a satisfactory growth medium for a wide variety of plant species.

0181153

CLAIMS:

1.    A process for the utilisation of solid paper mill waste, which comprises introducing earthworms and/or earthworm cocoons into a mass of the waste and allowing the worms to mature and breed in the waste until it is converted into a friable, soil-like material.

2.    A process according to claim 1, in which the species of earthworm which is introduced as worms and/or cocoons is Eisenia foetida or Eudrilus eugeniae.

3.    A process according to claim 1, in which the solid waste contains additional nitrogen-containing nutrient material and the species of earthworm introduced as worms and/or cocoons is Dendrobaena veneta.

4.    A process according to any one of claims 1 to 3, in which the temperature of the waste is not allowed to exceed 35°C.

5.    A process according to any of claims 1 to 4, in which the solid waste has a water content of about 65% by weight.

6.    A process according to any of claims 1 to 5, in which earthworms are introduced in an amount of 2 kg per square metre of waste.

7.    A process according to any of claims 1 to 6, in which the earthworms and the friable, soil-like material are subsequently separated.